# EUROPEAN PATENT APPLICATION

(11) **EP 3 747 589 A1**
(43) Date of publication of application: **09.12.2020**
(21) Application number: 20178466.7
(22) Date of filing: 05.06.2020
(51) Int. Cl.: B23P 6/00, B23K 1/00, B23P 6/04, F01D 5/00

(54) **BRAZE-IN-PLACE PLUG REPAIR METHOD FOR THROUGH-WALL DEFECTS ON CASTINGS**

(30) Priority: 07.06.2019 US 201916434744
(71) Applicant: Raytheon Technologies Corporation, Farmington, CT 06032 (US)
(72) Inventor: REBBECCHI Jr., Thomas Anthony, West Hartford, CT Connecticut 06119 (US); BAREISS, Edward R., Stafford Springs, CT Connecticut 06076 (US); WILSON, Shorntell D., New Haven, CT Connecticut 06511 (US); KEDLAYA, Nagendra Narasimha, Glastonbury, CT Connecticut 06033 (US); McILRATH, Joseph F., Ellington, CT Connecticut 06029 (US)
(74) Representative: Dehns

(57) **Abstract**

A method of repairing a cast article defect (236; 1300; 1400), in accordance with various embodiments, is disclosed herein. The method may comprise: machining an aperture (310) at a defect location of a cast article (300; 1200); coating a plug side surface (410) of a plug (400) with a braze material; coating at least one of a top surface or a bottom surface of the plug with an excess braze material; inserting the plug into the aperture from the inner surface of the cast article towards the outer surface of the cast article and leaving at least one void between a the braze material and a side surface of the aperture; and heating the cast article and the plug.

## Description

### FIELD

This disclosure relates to a gas turbine engine, and more particularly to repairing cast components of gas turbine engines.

### BACKGROUND

Engine architecture depends on structural casting for mechanical integrity and/or control of airflow. Casting technology enable fabrication of intricate designs that forging or wrought alloy processing may not produce. Casting may contain defects, such as residual casting core material, dross, inclusions, porosity, shrinkage, etc. The defects may result in non-conforming parts.

### SUMMARY

A method of repairing a cast article defect, in accordance with various embodiments, is disclosed herein. The method may comprise: machining an aperture at a defect location of a cast article, the aperture having a first diameter at an outer surface of the cast article and a second diameter at an inner surface of the cast article, the first diameter being greater than or equal to the second diameter; coating a plug side surface of a plug with a braze material, the plug having a complimentary shape with the aperture; coating at least one of a top surface or a bottom surface of the plug with an excess braze material; inserting the plug into the aperture from the inner surface of the cast article towards the outer surface of the cast article and leaving at least one void between a the braze material and a side surface of the aperture; and heating the cast article and the plug.

In various embodiments, the method may further comprise removing a portion of the excess braze material from at least one of the top surface or the bottom surface of the plug. The cast article may have a wall thickness between 0.12" (0.305 cm) to 1.5" (3.81 cm). The first diameter may be greater than the second diameter. The cast article may be a non-directionally oriented microstructure. After the inserting, the plug may comprise a gap between the plug side surface of the plug and the side surface of the aperture, the gap being between 0.002" (0.0508 mm) and 0.004" (0.1016 mm), and the gap being partially filled by the braze material. The method may further comprise filling the at least one void with the excess braze material. The plug may be frustoconical in shape.

A method of repairing a cast article defect, in accordance with various embodiments, is disclosed herein. The method may comprise: machining an aperture at a defect location of a cast article, the aperture having a first diameter at an outer surface of the cast article and a second diameter at an inner surface of the cast article, the first diameter being greater than or equal to the second diameter; coating a side surface of the aperture with a braze material; coating at least one of a portion of the outer surface proximate the aperture or a portion of the inner surface proximate the aperture of the cast article with an excess braze material; inserting a plug having a complimentary shape to the aperture into the aperture from the inner surface of the cast article towards the outer surface of the cast article, and leaving at least one void between a the braze material and a plug side surface of the plug; and heating the cast article and the plug.

The method may further comprise removing a portion of the excess braze material from at least one of the portion of the outer surface or the portion of the inner surface of the plug. The cast article may have a wall thickness between 0.12" (0.305 cm) to 1.5" (3.81 cm). The first diameter may be greater than the second diameter. The cast article may be a non-directionally oriented microstructure. After the inserting, the plug may comprise a gap between the plug side surface of the plug and the side surface of the aperture, the gap being between 0.002" (0.0508 mm) and 0.004" (0.1016 mm)), and the gap being partially filled by the braze material. The method may further comprise filling the at least one void with a portion of the excess braze material. The plug may be frustoconical in shape.

A repaired cast article, in accordance with various embodiments, is disclosed herein. The repaired cast article may comprise a cast article and a frustoconical plug. The cast article may comprise an outer wall and an inner wall. The outer wall may have an outer surface and an inner surface. The inner wall may be disposed opposite the outer wall and define an internal cavity. The frustoconical plug may be disposed in the outer wall. The frustoconical plug may have a first diameter at the inner surface of the outer wall and a second diameter at the outer surface of the outer wall, the first diameter being greater than the second diameter. A thickness of the outer wall may be between 0.12" (0.305 cm) to 1.5" (3.81 cm). The repaired cast article may further comprise a gap between a plug side surface of the frustoconical plug and an aperture surface of the cast article, the gap being between 0.002" (0.0508 mm) and 0.004" (0.1016 mm)), and the gap being filled with a braze material. The cast article may be a non-directionally oriented microstructure.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine, in accordance with various embodiments;
FIG. 2 illustrates a cross section of a portion of a cast article, in accordance with various embodiments;
FIG. 3 illustrates a cross section of a portion of a cast article, in accordance with various embodiments;
FIG. 4 illustrates a cross section of a plug configured to mate with an aperture of a cast article, in accordance with various embodiments;
FIG. 5 illustrates a cross section of a plug assembly in accordance with various embodiments;
FIG. 6 illustrates a cross section of a plug assembly inserted into an aperture of a cast article, prior to a brazing process, in accordance with various embodiments;
FIG. 7 illustrates a cross section of a plug assembly inserted into an aperture of a cast article, post-brazing, in accordance with various embodiments;
FIG. 8 illustrates a cross section of a repaired cast article, in accordance with various embodiments;
FIG. 9 illustrates a cross section of a portion of a cast article assembly prior to brazing, in accordance with various embodiments;
FIG. 10 illustrates a cross section of a plug inserted into an aperture of a cast article assembly, prior to a brazing process, in accordance with various embodiments;
FIG. 11 illustrates a cross section of a plug inserted into an aperture of a cast article assembly, post-brazing, in accordance with various embodiments;
FIG. 12 illustrates a cross section of a repaired cast article 1200, in accordance with various embodiments;
FIG. 13 illustrates a method of repairing a cast article having a defect, in accordance with various embodiments; and
FIG. 14 illustrates a method of repairing a cast article having a defect, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine.

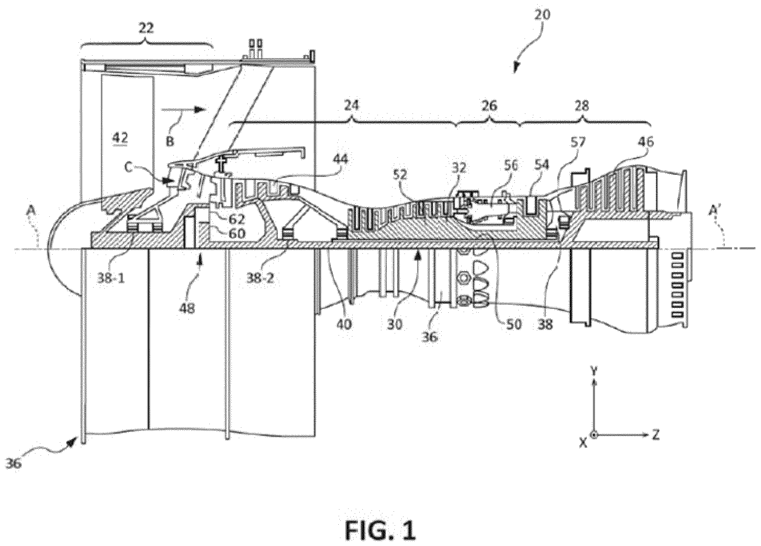

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include other systems or features. In operation, fan section 22 can drive coolant (e.g., air) along a bypass flow-path B while compressor section 24 can drive coolant along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

Still referring to FIG. 1, various gas turbine engine components may be manufactured via a casting process. A casting process may comprise heating a metal until it becomes liquid and pouring it into a mold. The mold may contain at least one hollow cavity of a desired shape. The liquid metal may then be allowed to solidify into the desired shape. The casting process may allow the manufacturing of complex shapes, such as the mid-turbine frame 57, blades of low pressure compressor 44 low pressure turbine 46, high pressure compressor 52, high pressure turbine 56, and/or manifolds supporting a fuel system, lubrication system, hydraulic system. After the casting process is complete, a cast component may contain defects, such as residual casting core material, dross, inclusions, porosity, shrinkage, and/or the like.

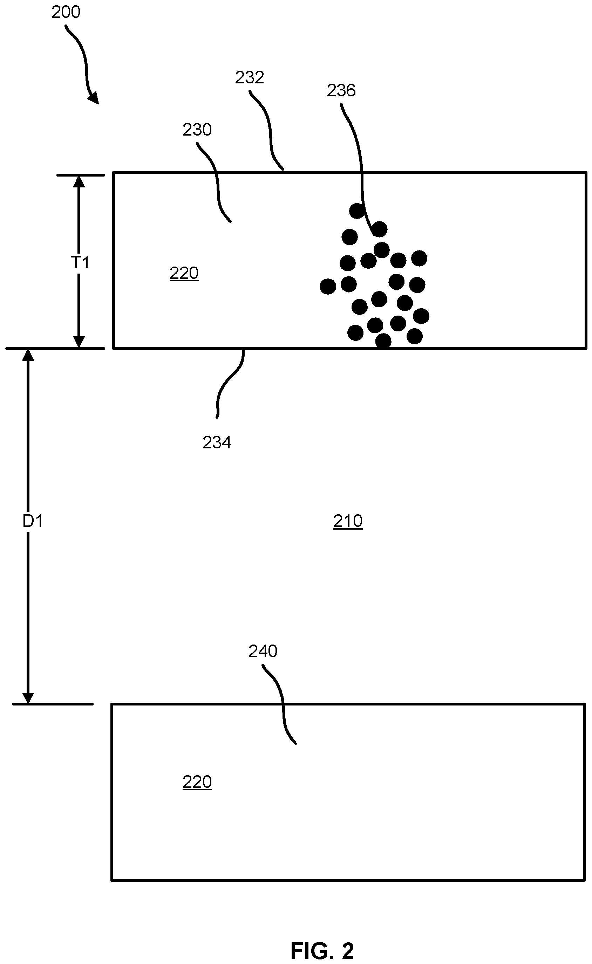

Referring now to FIG. 2, a cross section of a portion of a cast article 200, in accordance with various embodiments, is depicted. The cast article may be formed of a superalloy composition having a non-directionally oriented microstructure. In various embodiments, the superalloy may be a nickel based super alloy or a cobalt based super alloy. In various embodiments, thickness of the portion of the cast article, T1, may be between 0.06" (0.1524 cm) and 1.75" (4.45 cm), or between 0.12" (0.305 cm) to 1.5" (3.81 cm), or between 0.20" (0.508 cm) and 1.2" (3.05 cm). The cast article may be formed via casting with multiple cores. The cores may be formed separately and then assembled into a wax die. The wax die may create the hollow cavities during the casting process. In various embodiments, a cavity created by the die may provide tooling access to an internal surface of the cavity.

First wall 230 may be an outer wall having an outer surface 232 and an inner surface 234. In various embodiments, the portion of the cast article 200 may comprise a cavity 210 and a wall 220. In various embodiments, wall 220 may comprise a first wall 230 and a second wall 240. The wall 220 may have a distance D1 defined between as a distance measured perpendicular to inner surface 234 from first wall 230 to second wall 240, the second wall 240 being opposite the first wall 230. In various embodiments, the distance D1 may vary through the cavity 210. In various embodiments, distance D1 may be uniform throughout cavity 210. In various embodiments, distance D1 may have a minimum distance of 0.75" (1.90 cm). Outer surface 232 may be exposed to a gas path of a gas turbine engine, such as bypass flow path B and/or core flow path C during operation of the gas turbine engine as depicted in FIG. 1. In contrast, inner surface may be exposed to a fluid, such as oil, fuel, air, hydraulic fluid, etc. being directed to other gas engine components during operation of the gas turbine engine. In various embodiments, first wall 230 may have a defect 236. The defect 236 may comprise residual casting core material, dross, inclusions, porosity, shrinkage, etc. The defect may be of a size, such that it does not conform to quality standards to accept the part for use in a gas turbine engine.

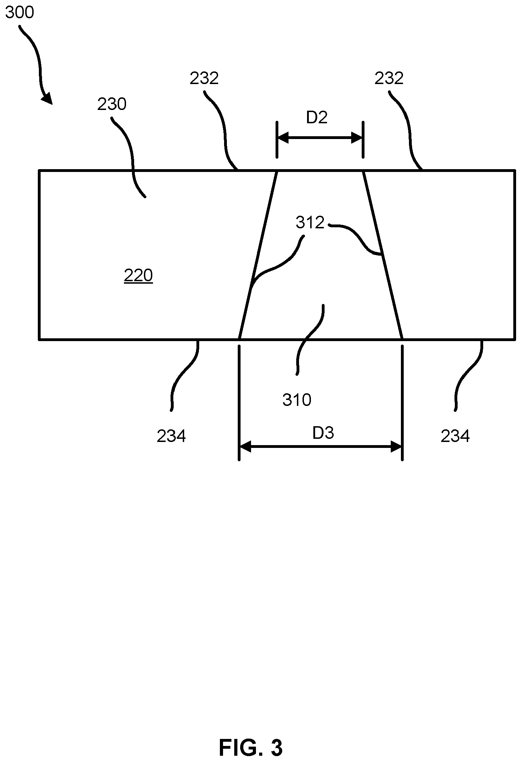

Referring now to FIG. 3, a cross section of a portion of a cast article 300, in accordance with various embodiments, is depicted. Cast article 200 may comprise first wall 230 having an outer surface 232 and an inner surface 234. An aperture 310 may be created where the defect 236 was by machining through the first wall 230. The aperture 310 may have a side surface 312 revolved around a centerline of aperture 310. The aperture 310 may have a first diameter D2 on outer surface 232. The first diameter D2 may be a limiting diameter. A limiting diameter may be a diameter defined for uniformity of a process (e.g., regardless of thickness, T1 of a cast component, the same limiting diameter may be used). The first diameter D2 may be used as a reference diameter for all applications of a repairing process of a casting defect. The aperture 310 may have a second diameter D3 at inner surface 234. In various embodiments, the second diameter D3 may be greater than or equal to first diameter D2. The aperture 310 may be configured to receive a plug to be bonded to the first wall 230 and fill aperture 310. In various embodiments, the side surface 312 may be tapered at an angle between 0 degrees and 60 degrees, or between 2 degrees and 60 degrees, or between 5 degrees and 60 degrees, or between 10 degrees and 60 degrees. With brief reference to FIG. 1, when the distance D1 of cavity 210 does not provide sufficient access for a boring tool to bore the aperture 310 from within cavity 210, an Electro-Discharge Machining (EDM) process may be utilized to bore the hole from the outer surface 232 of the first wall 230.

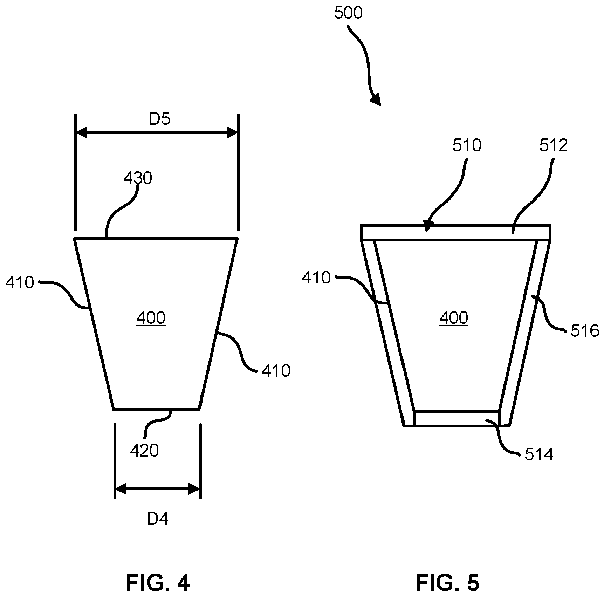

Referring now to FIGs. 3 and 4, a cross section of a plug 400 configured to mate with aperture 310 of the cast article 300 is illustrated in accordance with various embodiments. The plug 400 may have a complimentary shape to aperture 310 (e.g., the plug may be frustoconical in shape). The plug 400 may have a first surface 420, a second surface 430 opposite the first surface 420, and a plug side surface 410. The plug side surface 410 may revolve around a centerline of the plug 400 extending from a center point of the first surface to a center point of the second surface 430. The first surface 420 may have a first diameter D4, and the second surface 430 may have a second diameter D5. The first diameter D4 may be greater than or equal to the second diameter D5. First diameter D4 of the plug 400 may be less than first diameter D2 of the aperture 310. In various embodiments, the first diameter D4 of the plug 400 may be between 0.002" (0.1016 mm) - 0.100" (2.54 mm) less than the first diameter D2 of the aperture 310. In various embodiments, the second diameter D5 of the plug 400 is greater than or equal to the second diameter D3 of the aperture 310. In various embodiments, the second diameter D5 of the plug 400 may be between 0.002" (0.0508 mm) - 0.100" (2.54 mm) greater than the second diameter D3 of the aperture 310. In various embodiments, the plug 400 has a height greater than or equal to the thickness of the cast article. In various embodiments, the plug side surface 410 may be tapered at an angle between 0 degrees and 60 degrees, or between 2 degrees and 60 degrees, or between 5 degrees and 60 degrees, or between 10 degrees and 60 degrees. In various embodiments, the taper angle of the plug side surface 410 is substantially equal to the taper angle of the side surface 312 of aperture 310. In various embodiments, substantially equal is plus or minus 2 degrees. In various embodiments, the plug 400 may comprise a material that is the same as the material of the cast article. In various embodiments, the plug 400 may comprise a material that is different than the material of the cast article.

Referring now to FIG. 5, a cross section of a plug assembly 500 in accordance with various embodiments is depicted. The plug assembly 500 may comprise a plug 400 and a braze material 510. Various materials may be used for the braze material 510, including but not limited to nickel-boron pastes, nickel-silicon pastes, nickel-phosphorus pastes, gold pastes or other any other material capable of withstanding high temperatures in the gas turbine engine and creating a strong bond between the plug 400 and the cast article 300. In various embodiments, the braze material 510 may be disposed on at least a portion of plug side surface 410. In various embodiments, the braze material 510 may cover the plug side surface 410 in its entirety. In various embodiments, the braze material 510 may have a thickness being less than or equal to the gap between the side surface 312 of the aperture 310 and the plug side surface 410 of the plug 400. In various embodiments, the thickness of the braze material 510 may be between 0.001" (0.0254 mm) and 0.004" (0.1016 mm).

In various embodiments, the braze material 510 may further be disposed on the at least a portion of first surface 420 and a portion of the second surface 430 of the plug 400. The braze material 510 may be added to the plug 400 by dipping the plug 400 in the braze material, coating the plug 400 with the braze material 510, spraying the braze material 510 on the plug 400, or by vapor deposition of the braze material 510 onto the plug 400.

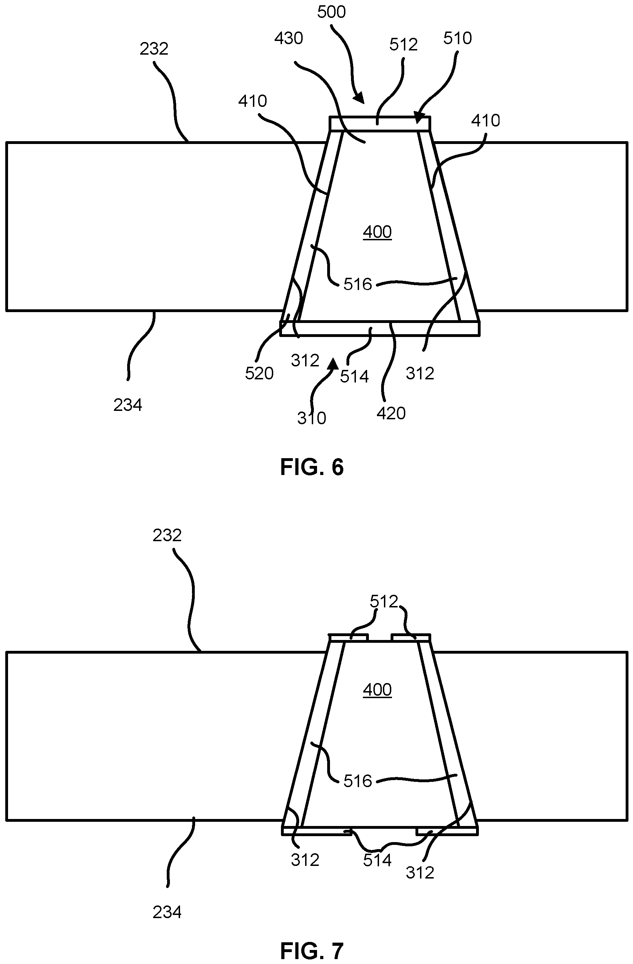

Referring now to FIG. 6, a cross section of a plug assembly 500 inserted into an aperture 310 of a cast article 300, prior to a brazing process, is depicted. In various embodiments, first surface 420 is flush with outer surface 232. In various embodiments, first surface 420 extends beyond outer surface 232. Similarly, second surface 430 may be flush with inner surface 234 or extend beyond inner surface 234 into the cavity. The side surface 312 and the plug side surface 410 may be separated by a gap between 0.002" (0.0508 mm) and 0.004" (0.1016 mm). By side braze material 516 at least partially filling the gap, the plug assembly 500 may be easier to align and place in the aperture 310 and account for variances in the gap along the side surface 312 of the aperture 310. During the brazing process, the braze material 510 may fuse the cast article 300 to the plug 400. In various embodiments, during the heating of cast article 300, the braze material 510 may pull from the outer surface braze material 512 and/or the inner surface braze material 514 to fill any gaps between the side braze material 516 and the side surface 312 of the aperture 310. In various embodiments, the braze material 510 may fill up to a 0.004" (0.1016 mm) gap. In other words, the brazing process may pull the outer surface braze material 512 and the inner surface braze material 514, which are in areas that are not adjacent to a surface, to fill a void 520 between side braze material 516 and side surface 312 of aperture 310.

Referring now to FIG. 7, a cross section of a plug assembly 500 inserted into an aperture 310 of a cast article 300, post-brazing, is depicted. The capillary flow of braze material 510 may draw braze material 510 from the plug side surface 410 to the void 520. After the brazing process, the inner surface braze material 514 that remains may be reduced, the outer surface braze material 512 may also be reduced, and the side braze material 516 may be increased due to the brazing process filling the voids between side braze material 516 and side surface 312 of aperture 310. Although the inner surface braze material 514 is depicted as non-continuous, it could be continuous in various embodiments. After the brazing process, the excess outer surface braze material 512, any excess plug portion extending beyond outer surface 232, the inner surface braze material 514, and/or any excess plug portion extending beyond inner surface 234 may be removed by machining, or any other method known in the art.

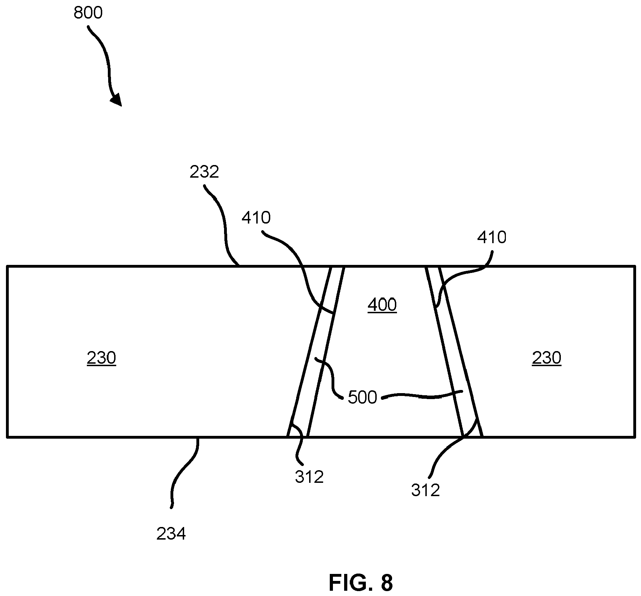

Referring now to FIG. 8, a cross section of a repaired cast article 800, in accordance with various embodiments is depicted. Repaired cast article may comprise a wall 220, a plug 400, and a braze material 510. The braze material 510 may be disposed between the side surface 312 of the aperture 310 and the plug side surface 410 of the plug 400. The plug may have a diameter at outer surface 232 of first wall 230 that is less than a diameter at inner surface 234 of first wall 230.

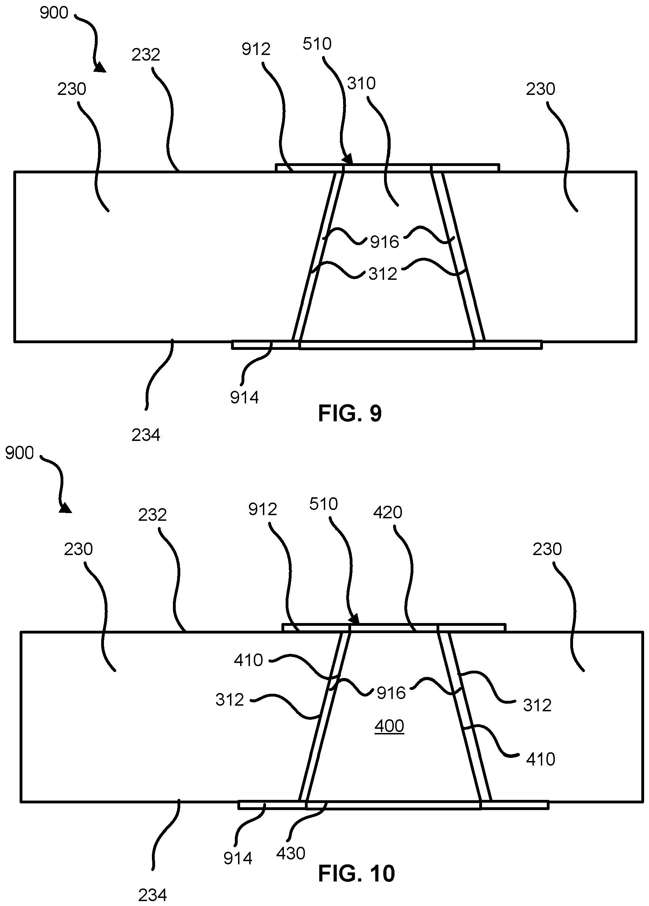

Referring now to FIG. 9, a cross section of a portion of a cast article assembly 900 prior to brazing, in accordance with various embodiments, is depicted. Cast article assembly 900 may comprise an first wall 230, an aperture 310, and a braze material 510. The braze material 510 may comprise an outer surface braze portion 912, an inner surface braze portion 914 and a side surface braze portion 916. The side surface braze portion 916 may be disposed on side surface 312 of the aperture 310. The outer surface braze portion 912 may be disposed on a portion of outer surface 232 of first wall 230, the portion of outer surface 232 being proximate the side surface 312. The inner surface braze portion 914 may be disposed on a portion of inner surface 234 of the first wall 230, the portion of inner surface 234 being proximate the side surface 312.

Referring now to FIG. 10, a cross section of a plug 400 inserted into an aperture 310 of a cast article assembly 900, prior to a brazing process is depicted. In various embodiments, first surface 420 is flush with outer surface 232. In various embodiments, first surface 420 extends beyond outer surface 232. Similarly, second surface 430 may be flush with inner surface 234 or extend beyond inner surface 234 into the cavity. The side surface 312 and the plug side surface 410 may be separated by a gap between 0.002" (0.0508 mm) and 0.004" (0.1016 mm). By side surface 912 braze portion 916 at least partially filling the gap, the plug 400 may be easier to align and place in the aperture and account for variances in the gap along the side surface 312. During the brazing process, the braze material 510 may fuse the cast article assembly 900 to the plug 400. In various embodiments, during the heating of cast article assembly 900, the braze material 510 may pull from the outer surface braze portion 912 and/or the inner surface braze portion 914 to fill any gaps between the side surface braze portion 916 and the plug side surface 410 of the plug 400. In various embodiments, the braze material 510 may fill up to a 0.004" (0.1016 mm) gap. In other words, the brazing process may pull the outer surface braze portion 912 and the inner surface braze portion 914, which are in areas that are not adjacent to a surface, to fill a void between side braze material 516 and plug side surface 410 of plug 400.

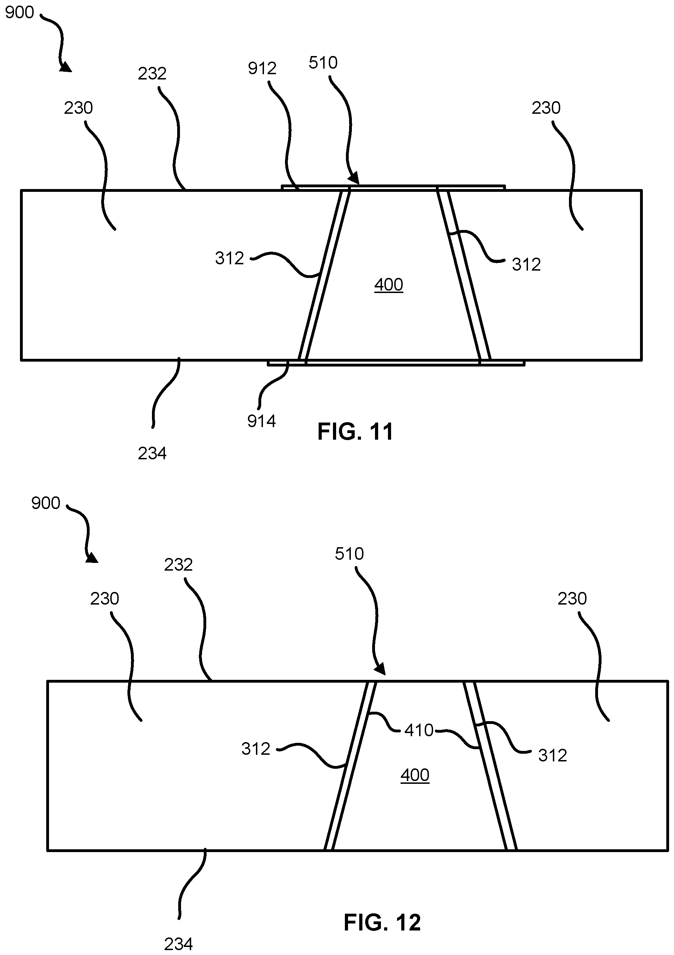

Referring now to FIG. 11, a cross section of a plug 400 inserted into an aperture 310 of a cast article assembly 900, post-brazing is depicted. After the brazing process, the inner surface braze portion 914 that remains may be reduced, the outer surface braze portion 912 may also be reduced, and the side surface braze portion 916 may be increased due to the brazing process filling the voids between side surface braze portion 916 and plug side surface 410 of plug 400. After the brazing process, the excess outer surface braze portion 912, any plug portion that extends past outer surface 232, any inner surface braze portion 914, and/or any plug portion that extends past inner surface 234 may be removed by machining, or any other method known in the art.

Referring now to FIG. 12, a cross section of a repaired cast article 1200, in accordance with various embodiments is depicted. Repaired cast article 1200 may comprise wall 220, a plug 400, and a braze material 510. The braze material 510 may be disposed between the side surface 312 of the aperture 310 and the plug side surface 410 of the plug 400. The plug may have a diameter at outer surface 232 of first wall 230 that is less than or equal to a diameter at inner surface 234 of first wall 230.

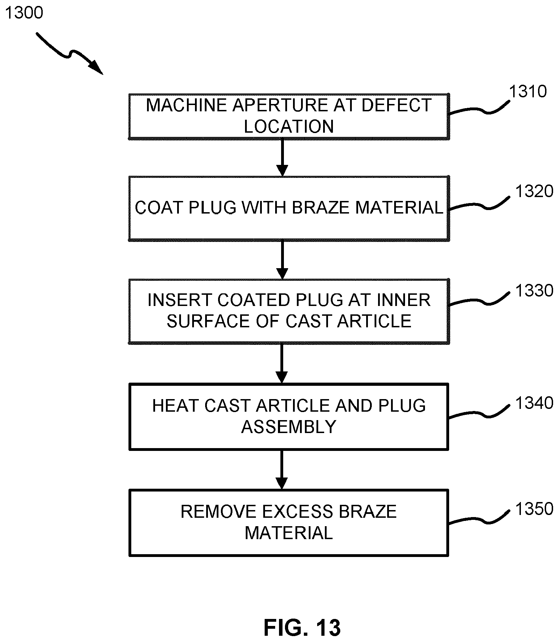

Referring now to FIG. 13, a method of repairing a cast article having a defect 1300, in accordance with various embodiments is depicted. The method may comprise machining an aperture at a defect location of the cast article (step 1310). The aperture may be tapered with an outer diameter at an inner surface of the cast article that is greater than or equal to an outer diameter at an outer surface of the cast article. Next, the method may comprise coating a plug with a braze material (step 1320). In various embodiments, the plug all surfaces of the plug may be coated with the braze material. The plug may have a complimentary shape to the aperture. The plug may be frustoconical in shape. Next, the plug may be inserted from an inner surface side of the cast article (step 1330). The inserted plug may have voids between the braze material and a side surface of the aperture in the cast article. Next, the cast article may be heated and join the plug to the cast article (step 1340). The cast article may be heated to a temperature at 1,975 °F (or 1,079 °C) or greater. The voids between the braze material and the side surface of the aperture may be filled by the excess braze material on an outer surface and an inner surface of the plug. Lastly, the excess braze material may be machined off of the inner surface and the outer surface of the plug (step 1350).

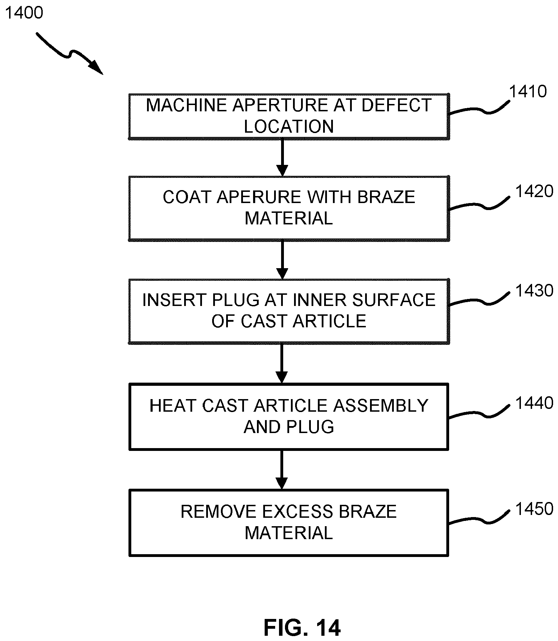

Referring now to FIG. 14, a method of repairing a cast article having a defect 1400, in accordance with various embodiments is depicted. The method may comprise machining an aperture at a defect location of the cast article (step 1410). The aperture may be tapered with an outer diameter at an inner surface of the cast article that is greater than or equal to an outer diameter at an outer surface of the cast article. Next, the method may comprise coating the aperture of the cast article with a braze material (step 1420). In various embodiments, the side surface of the aperture, an outer surface portion of the cast article proximate the aperture, and a portion of an inner surface of the cast article proximate the aperture may be coated with the braze material. Next, a plug may be inserted from an inner surface side of the cast article toward an outer surface of the cast article (step 1430). The plug may have a complimentary shape to the aperture. The plug may be frustoconical in shape. The inserted plug may have voids between the braze material and the side surface of the aperture in the cast article. Next, the cast article assembly may be heated and join the plug to the cast article (step 1440). The cast article assembly may be heated to a temperature at 1,975 °F (or 1,079 °C) or greater. The voids between the braze material and the side surface of the aperture may be filled by the excess braze material on the portion of the outer surface of the cast article and the portion of the inner surface of the cast article. Lastly, the excess braze material may be machined off of the inner surface and the outer surface of the plug (step 1450).

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of repairing a cast article defect, the method comprising:
machining an aperture at a defect location of a cast article, the aperture having a first diameter at an outer surface of the cast article and a second diameter at an inner surface of the cast article, the first diameter being greater than or equal to the second diameter;
coating a plug side surface of a plug with a braze material, the plug having a complimentary shape with the aperture;
coating at least one of a top surface or a bottom surface of the plug with an excess braze material;
inserting the plug into the aperture from the inner surface of the cast article towards the outer surface of the cast article and leaving at least one void between a the braze material and a side surface of the aperture; and
heating the cast article and the plug resulting in the plug affixed to the cast article via the braze material.

2. The method of claim 1, wherein after heating the cast article and the plug, the method further comprises removing a portion of the excess braze material from at least one of the top surface or the bottom surface of the plug.

3. The method of claim 1 or 2, further comprising filling the at least one void with the excess braze material.

4. A method of repairing a cast article defect, the method comprising:
machining an aperture at a defect location of a cast article, the aperture having a first diameter at an outer surface of the cast article and a second diameter at an inner surface of the cast article, the first diameter being greater than or equal to the second diameter;
coating a side surface of the aperture with a braze material;
coating at least one of a portion of the outer surface proximate the aperture or a portion of the inner surface proximate the aperture of the cast article with an excess braze material;
inserting a plug having a complimentary shape to the aperture into the aperture from the inner surface of the cast article towards the outer surface of the cast article, and leaving at least one void between a the braze material and a plug side surface of the plug; and
heating the cast article and the plug.

5. The method of claim 4, further comprising filling the at least one void with a portion of the excess braze material.

6. The method of claim 4 or 5, wherein after heating the cast article and the plug, the method further comprises removing a portion of the excess braze material from at least one of the portion of the outer surface or the portion of the inner surface of the plug.

7. The method of any preceding claim, wherein the cast article has a wall thickness between 0.12" (0.305 cm) to 1.5" (3.81 cm).

8. The method of any preceding claim, wherein the first diameter is greater than the second diameter.

9. The method of any preceding claim, wherein the cast article is a non-directionally oriented microstructure.

10. The method of any preceding claim, wherein, after the inserting, the plug comprises a gap between the plug side surface of the plug and the side surface of the aperture, the gap being between 0.002" (0.0508 mm) and 0.004" (0.1016 mm)), and the gap being partially filled by the braze material.

11. The method of any preceding claim, wherein the plug is frustoconical in shape.

12. A repaired cast article comprising:
a cast article having a cast article material comprising:
an outer wall having an outer surface and an inner surface; and
an inner wall disposed opposite the outer wall and defining an internal cavity; and
a frustoconical plug disposed in the outer wall, the frustoconical plug having a plug material, a first diameter at the inner surface of the outer wall, and a second diameter at the outer surface of the outer wall, the first diameter being greater than the second diameter.

13. The repaired cast article of claim 12, wherein a thickness of the outer wall is between 0.12" (0.305 cm) to 1.5" (3.81 cm).

14. The repaired cast article of claim 12 or 13, further comprising a gap between a plug side surface of the frustoconical plug and an aperture surface of the cast article, the gap being between 0.002" (0.0508 mm) and 0.004" (0.1016 mm)), the gap being filled with a braze material.

15. The repaired cast article of claim 12, 13 or 14, wherein the cast article is a non-directionally oriented microstructure, and wherein the cast article material is either different from the plug material or the same as the plug material.
